(19) Europäisches Patentamt
European Patent Office
Office européen des brevets

(11) EP 3 657 786 A1

(12) EUROPEAN PATENT APPLICATION

(43) Date of publication:
27.05.2020 Bulletin 2020/22

(21) Application number: 18306545.7

(22) Date of filing: 22.11.2018

(51) Int Cl.:
H04N 13/111 (2018.01)     G06T 7/00 (2017.01)
H04N 13/161 (2018.01)     H04N 19/597 (2014.01)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(72) Inventors:
• HAWARY, Fatma
  35576 Cessons-Sévigné (FR)
• GUILLEMOT, Christine
  35042 Rennes (FR)
• BOISSON, Guillaume
  35576 Cesson-Sévigné (FR)

(71) Applicants:
• InterDigital CE Patent Holdings
  75017 Paris (FR)
• INRIA - Institut National de Recherche en
  Informatique et en Automatique
  78150 Le Chesnay (FR)

(74) Representative: Huchet, Anne
InterDigital CE Patent Holdings
20, rue Rouget de Lisle
92130 Issy-les-Moulineaux (FR)

(54) LIGHT FIELD RECONSTRUCTION

(57) A method and system are provided for processing an acquired light field data. In one embodiment the method includes deconstructing an acquired light field data into a plurality of acquisition samples and creating a compressed signal sensing framework using the acquisition samples. The compressed signal sensing framework is then stored. Upon receiving a reproduction request, a sparsity reconstruction is performed on the previously stored compressed signal sensing framework to provide with the light field data.

710 — Light field data is acquired associated with a content

720 — Content deconstructed into a plurality of reiterative acquisition samples each having an associated frame rate.

730 — A compressed signal sensing framework is created using the acquisition samples.

740 — Compressed signal sensing framework is stored

750 — After receiving a reproduction request a sparsity reconstruction is performed to generate content.

Figure 7

**Description**

**TECHNICAL FIELD**

The present embodiments relate generally to image processing and more particularly to images processing using light field reconstruction techniques with iterative refinement capabilities.

**BACKGROUND**

Conventional cameras capture light from a three-dimensional scene on a two-dimensional sensor device sensitive to visible light. Light sensitive technology used in such imaging devices is often based on semiconductor technology, capable of converting photons into electrons such as, for example, charge coupled devices (CCD) or complementary metal oxide technology (CMOS). A digital image photosensor, for example, typically includes an array of photosensitive cells, each cell being configured to capture incoming light. A 2D image providing spatial information is obtained from a measurement of the total amount of light captured by each photosensitive cell of the image sensor device. While the 2D image can provide information on the intensity of the light and the color of the light at spatial points of the photosensor(s), no information is provided on the direction of the incoming light.

Light field cameras (also known as radiance capturing cameras) can provide directional information on incoming light rays in additional to 2D spatial information. The directional information may be obtained using an array of microlenses, often referred to as a microlens array (MLA) associated with an image sensor. A light field array camera, for example, is provided with a microlens array and a photosensor. Light field cameras include plenoptic cameras, camera arrays and distributed cameras. A plenoptic camera is provided with a main lens focusing light on a MLA, and a photosensor associated with the MLA. In other configurations of light field cameras, a plurality of cameras each provided with its own lens and sensor may be used to obtain light field data.

A light field is often defined as a 4D function characterizing the light from different directions at different points in a scene. The information on the directional distribution of the light rays is typically referred to as light field data or 4D data. Since the information provides 4 parameters - two-dimensional positional information and two-dimensional angular information - the directional distribution corresponds to a four-dimensional (4D) function. The light field may be interpreted as a two-dimensional collection of 2D images of a scene.

The light field data obtained can be processed for many applications, for example, to generate refocused images of the scene, to generate images from different viewpoints, to provide depth information on the captured scene or to generate 3D images.

Light field data can take up large amounts of storage space which can make storage cumbersome and processing less efficient. In addition, light field acquisition devices are extremely heterogeneous. Light field cameras are of different types for example plenoptic or camera arrays. Within each type there are many differences such as different optical arrangements, or micro-lenses of different focal lengths. Each camera has its own proprietary file format. At present, there is no standard supporting the acquisition and transmission of multi-dimensional information for an exhaustive over-view of the different parameters upon which a light-field depends. As such, acquired light field data for different cameras have a diversity of formats.

Consequently, improved techniques are desirous that can provide better acquisition and processing of captured contents.

**SUMMARY**

A method and system are provided for processing an acquired light field data. In one embodiment the method includes deconstructing an acquired light field data into a plurality of reiterative acquisition samples and creating a compressed signal sensing framework using these acquisition samples. The compressed signal sensing framework can then be stored. In an embodiments, upon receiving a reproduction request, a sparsity reconstruction may be performed on a p stored compressed signal sensing framework to generate a content.

**BRIEF DESCRIPTION OF THE DRAWINGS**

Different embodiments of the will now be described, by way of example only, and with reference to the following drawings in which:

Figure 1A is a schematic diagram of a light field camera according to a first embodiment;

Figure 1B is a schematic diagram of a light field camera according to a second embodiment;

Figure 2A is a functional diagram of a light field camera according to an embodiment;

Figure 2B is a functional diagram of a light field data formator and light field data processor according to an embodiment;

Figure 3 is an example of a 2D light field image formed on a photosensor array;

Figure 4 is a block diagram illustrating a compressive sensing scheme according to one embodiment;

Figure 5A provides an illustration of the sparsity concept according to one embodiment;

Figure 5B provides an illustration of an angular domain along the discrete lines;

Figure 6 is a flow diagram according to one embodiment showing an iterative signal reconstruction process; and

Figure 7 is a flow diagram of a methodology according to one embodiment.

## DETAILED DESCRIPTION

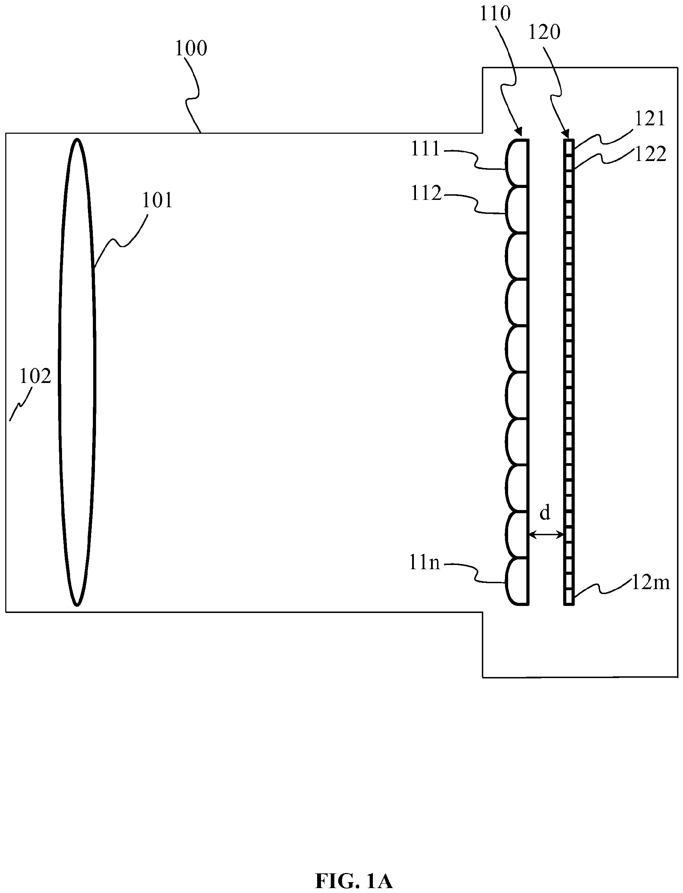

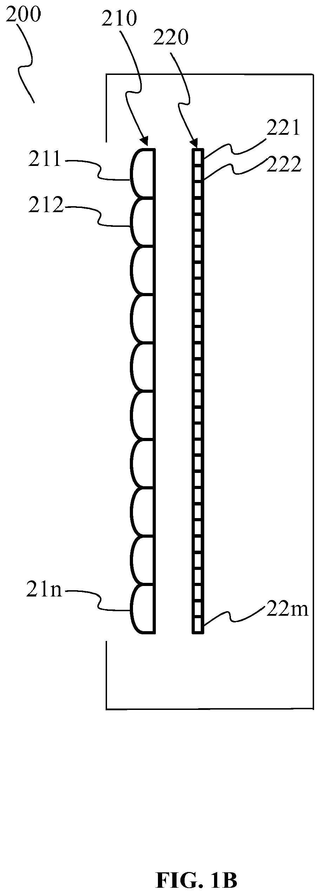

Light-field cameras are typically used to record a 4D light field on a sensor composed of an array of pixels. The 4D light field data provides 2-dimensional spatial information and 2-dimensional angular information on the incoming light. Such light-field cameras may be for instance: a plenoptic camera 100 comprising a main lens 101, an array of lenses 110 and a photo sensor 120 as illustrated in Figure 1A; or a multi-camera array comprising an array of lenses 210 and a photosensor 220 without a main lens, as illustrated in Figure 1B. A multi-array camera may be considered as a particular case of a plenoptic camera where the main lens has an infinite focal.

Different embodiments provide formatting of light field data for further processing applications such as format conversion, refocusing, viewpoint change and 3D image generation.

Figure 1A is a schematic diagram of a light field camera for which one or more embodiments may be applied.

The light field camera 100 of Figure 1A is a plenoptic type light field camera comprising a micro lens array 110 and an image sensor 120 associated with the micro lens array 110. Further optics may be provided such as an aperture 102 for enabling a selectable amount of light to enter the light field camera. The lens arrangement further includes a main (objective) lens 101 for focusing light towards the micro lens array 110.

The microlens array 110 is composed of an array of micro-lenses 111, 112, 113...11n arranged, in a regular lattice structure. For example, the structure may be a rectangular lattice of rows and columns. The microlens array may also be referred to as a lenslet array. For purposes of illustration, the microlens array 110 is shown with a relatively small number of micro-lenses, but it will be appreciated that the number of micro-lenses may reach up to several thousand or even several million micro-lenses.

Optionally, spacers might be placed around each micro lens of the micro-lens array 110 between the microlens array 110 and the image sensor 120 to prevent light from one micro lens from overlapping with light of other micro-lenses of the microlens array 110 at the image sensor 120.

The image sensor comprises a photosensor array 120 composed of a number m of photo sensors 121, 122, 123, 124....12m arranged in a lattice structure. For example, the structure may be a rectangular lattice of rows and columns. Each photosensor 121, 122, 123, 124....12m corresponds to a pixel or a group of pixels of the raw image of the scene captured by the photosensor array 120, each pixel covering a part (also referred to as a point) of the scene. For purposes of illustration, the photosensor array 120 is illustrated as having a relatively small number of photosensors 121 to 121m. It will be appreciated, however, that the number of photosensors is not limited to that illustrated in Figure 1A but may be extended to any number of photosensors, for example several thousand or several million photosensors. As an illustrative example, an image of 12.4 megapixels may be provided by an array of 4088x3040 pixels/photosensors. The image sensor may be for example a charge coupled device (CCD).

The micro-lenses 111, 112, 11n of the micro lens array 110 are arranged such that each microlens is optically associated with photosensors of the photo sensor array 120. The photosensor array 120 is generally of finer pitch than the microlens array. Accordingly, each microlens is associated with a plurality of photosensors of the photosensor array 120. Optical association between a microlens and a group of photosensors signifies that the light rays passing through a given microlens reach at least one of the group of photosensors optically associated with the given microlens.

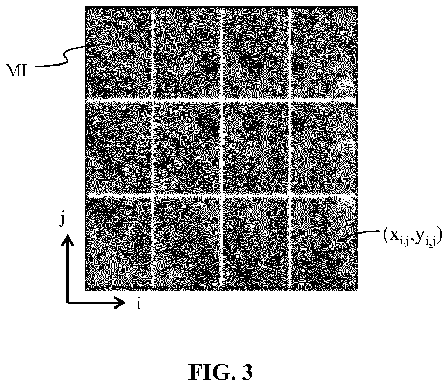

The interposition of the microlens array 110 between the main lens 101 and the photosensor 120 results in multiple images being formed on the photosensor array 120. Each microlens of the microlens array 110 projects a respective image, onto the associated photosensors of the photosensor array 120. Accordingly, the raw image captured by the image sensor 120 is composed of an array of small images, as for example illustrated in Figure 3, typically referred to as micro-images. Each micro-image corresponds to a partial field of view from a respective different viewpoint. and corresponds to a micro-lens of the microlens array. Each pixel of photosensor 120 may be seen as corresponding to a 4D light field coordinate where two dimensions specify its spatial position on the sensor and two dimensions specify the angular or directional information of light that is incident upon that pixel according to the 2D position of the pixel within the micro-image which it belongs to.

A color filter array (CFA) may in some cases be arranged on the microlens array 110 or on the photosensor array 120. The CFA typically arranges RGB (Red, Green and Blue) color filters on the photosensor or microlens array, the RGB arrangement taking, for example, the form of a Bayer filter mosaic. One color filter (red, green or blue filter) may be associated with an MLA according to a predetermined pattern, comprising 50 % green, 25 % red and 25 % blue in the example of a Bayer filter, such a pattern also being referred to as a RGBG, GRGB or RGGB pattern. It will be appreciated that, the arrangement of the color filters on the microlens array 110 or photosensor array 120 is not limited to a RGGB pattern. In other embodiments, the predetermined pattern may be a RGBE pattern with one of the green filters modified to 'Emerald' (for a block of four color filters); a CYYM pattern with one 'Cyan' filter, two 'Yellow' filters and one 'Magenta' filter (for a block of four color filters); a CYGM pattern with one 'Cyan' filter, one 'Yellow' filter, one 'Green' filter and one 'Magenta' filter; a RGBW pattern with one 'Red' filter, one 'Green' filter, one 'Blue' filter and one 'White' filter, several arrangement being possible (for example arranged on a block of four color filters with 'White' for the upper left filter, 'Red' for the upper right filter, 'Blue' for the lower left filter and 'Green' for the lower right filter; or arranged on a block of 4x4 color filters with 'White', 'Blue', 'White', 'Green' for the first line, 'Blue', 'White', 'Green', 'White' for the second line below the first line, 'White', 'Green', 'White', 'Red' for the third line below the second line and 'Green', 'White', 'Red', 'White' for the fourth line below the third line).

The gap between the microlens array and the photosensor array may be composed of air, of an optical material having an index n (for example a glass layer) or of multiple layers comprising at least one layer air layer and at least one optical material layer. Using a glass layer to form the gap has the advantages of keeping the microlens array 110 at a constant distance from the photosensor array 120 uniformly across the photosensor array 120 and of reducing this distance when needed. If d is the distance between the output of the microlens array 110 and the photosensor array 120 along a longitudinal axis, having a layer composed of an optical material with an index n (n > 1, for example n = 1.5) between the micro lens array 110 and the photosensor array 120 enables the distance to be set to d/n without modifying the distance d. By adapting/modifying the index of the optical material of the layer forming the gap, it is possible to adapt/modify a parameter representative of the distance between the microlens array 110 and the photosensor array 120 without modifying the distance d.

Figure 1B is a schematic diagram of a light field camera according to a second embodiment.

The light field camera 200 according to the second embodiment is a multi-camera array type light field camera comprising a micro lens array 210 and an image sensor 220 associated with the micro lens array 210. In this embodiment a main lens 201 for focusing light towards the micro lens array 210 is not present. Elements such as the photosensor array 220 and micro lens array 210 operate in a similar manner to the corresponding elements of the plenoptic type camera of Figure 1A. The main difference is that the main lens is not present in the embodiment of Figure 1B. Each micro-image corresponds to a full field of view from a respective different viewpoint.

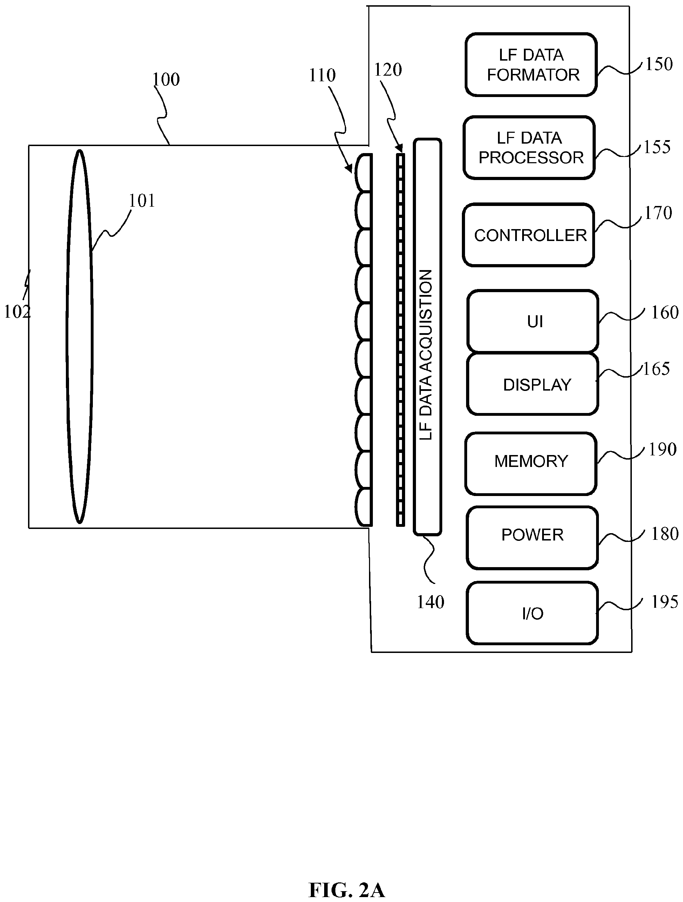

Figure 2A is a block diagram of a light field camera device in accordance with an embodiment. The light field camera comprises an aperture/shutter 102, a main (objective) lens 101, a micro lens array 110 and a photosensor array 120 in accordance with the light field camera of Figure 1A. In some embodiments the light field camera includes a shutter release that is activated to capture a light-field image of a subject or scene. It will be appreciated that the functional features may also be applied to the light field camera of Figure 1B.

The photosensor array 120 provides light field image data which is acquired by LF Data acquisition module 140 for generation of a light field data format by light field data formatting module 150 and/or for processing by light field data processor 155. Light field data may be stored, after acquisition and after processing, in memory 190 in a raw data format, as sub-aperture images or focal stacks, or in a light field data format in accordance with different embodiments.

In the illustrated example, the light field data formatting module 150 and the light field data processor 155 are disposed in or integrated into the light field camera 100. In other embodiments the light field data formatting module 150 and/or the light field data processor 155 may be provided in a separate component external to the light field capture camera. The separate component may be local or remote with respect to the light field image capture device. It will be appreciated that any suitable wired or wireless protocol may be used for transmitting light field image data to the formatting module 150 or light field data processor 155; for example the light field data processor may transfer captured light field image data and/ or other data via the Internet, a cellular data network, a WiFi network, a BlueTooth communication protocol, and/ or any other suitable means.

The light field data formatting module 150 is configured to generate data representative of the acquired light field, in accordance with different embodiments. The light field data formatting module 150 may be implemented in software, hardware or a combination thereof.

The light field data processor 155 is configured to operate on raw light field image data received directly from the LF data acquisition module 140 for example to generate focal stacks or a matrix of views in accordance with different embodiments. Output data, such as, for example, still images, 2D video streams, and the like of the captured scene may be generated. The light field data processor may be implemented in software, hardware or a combination thereof.

In at least one embodiment, the light field camera 100 may also include a user interface 160 for enabling a user to provide user input to control operation of camera 100 by controller 170. Control of the camera may include one or more of control of optical parameters of the camera such as shutter speed, or in the case of an adjustable light field camera, control of the relative distance between the microlens array and the photosensor, or the relative distance between the objective lens and the microlens array. In some embodiments the relative distances between optical elements of the light field camera may be manually adjusted. Control of the camera may also include control of other light field data acquisition parameters, light field data formatting parameters or light field processing parameters of the camera. The user interface 160 may comprise any suitable user input device(s) such as a touchscreen, buttons, keyboard, pointing device, and/ or the like. In this way, input received by the user interface can be used to control and/ or configure the LF data formatting module 150 for controlling the data formatting, the LF data processor 155 for controlling the processing of the acquired light field data and controller 170 for controlling the light field camera 100.

The light field camera includes a power source 180, such as one or more replaceable or rechargeable batteries. The light field camera comprises memory 190 for storing captured light-field data and/or rendered final images or other data such as software for implementing methods of different embodiments. The memory can include external and/ or internal memory. In at least one embodiment, the memory can be provided at a separate device and/ or location from camera 100.In one embodiment, the memory includes a removable/swappable storage device such as a memory stick.

The light field camera may also include a display unit 165 (e.g., an LCD screen) for viewing scenes in front of the camera prior to capture and/or for viewing previously captured and/or rendered images. The screen 165 may also be used to display one or more menus or other information to the user. The light field camera may further include one or more I/O interfaces 195, such as FireWire or Universal Serial Bus (USB) interfaces or wired or wireless communication interfaces for data communication via the Internet, a cellular data network, a WiFi network, a BlueTooth communication protocol, and/ or any other suitable means. The I/O interface 195 may be used for transferring data, such as light field representative data generated by LF data formatting module in accordance with different embodiments and light field data such as raw light field data or data processed by LF data processor 155, to and from external devices such as computer systems or display units, for rendering applications.

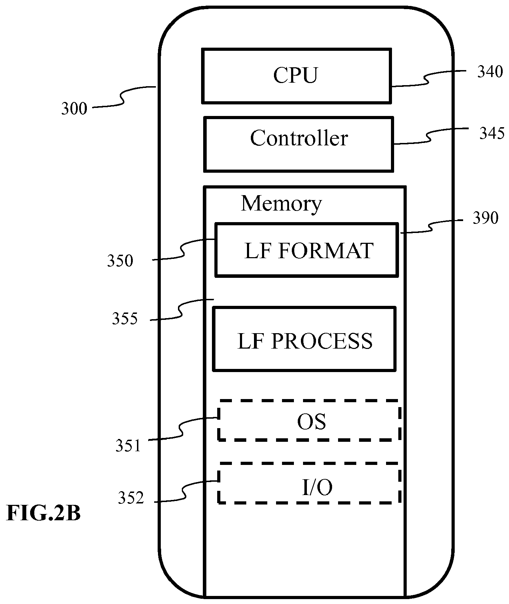

Figure 2B is a block diagram illustrating a particular embodiment of a potential implementation of light field data formatting module 150 and the light field data processor 153.

The circuit 300 includes memory 390, a memory controller 345 and processing circuitry 340 comprising one or more processing units (CPU(s)). The one or more processing units 340 are configured to run various software programs and/or sets of instructions stored in the memory 390 to perform various functions including light field data formatting and light field data processing. Software components stored in the memory include a data formatting module (or set of instructions) 350 for generating data representative of acquired light data in accordance with different embodiments and a light field data processing module (or set of instructions) 355 for processing light field data in accordance with different embodiments. Other modules may be included in the memory for applications of the light field camera device such as an operating system module 351 for controlling general system tasks (e.g. power management, memory management) and for facilitating communication between the various hardware and software components of the device 300, and an interface module 352 for controlling and managing communication with other devices via I/O interface ports.

Figure 3 illustrates an example of a 2D image formed on the photosensor array 120 of Figure 1A or the photosensor array 220 of Figure 1B. The 2D image, often referred to as a raw 4D light field image, is composed of an array of micro images MI, each micro image being produced by the respective micro lens $(i, j)$ of the microlens array 110,210. The micro images are arranged in the array in a rectangular lattice structure defined by axes $i$ and $j$. A micro lens image may be referenced by the respective micro lens coordinates $(i, j)$. A pixel PI of the photosensor 120, 220 may be referenced by its spatial coordinates $(x, y)$. 4D light field data associated with a given pixel may be referenced as $(x, y, i, j)$ where x and y are referenced for each micro lens; For example, for a micro lens having coordinates $(i, j)$ and 20x20 pixels:

$$0<x<19 \text{ and } 0<y<19.$$

There are several ways of representing (or defining) a 4D light-field image. For example, a 4D light-field image can be represented, by a collection of micro-lens images as previously described with reference to Figure 3. A 4D light-field image may also be represented, when recorded by a plenoptic camera by a set of sub-aperture images. Each sub-aperture image of composed of pixels of the same position selected from each microlens image.

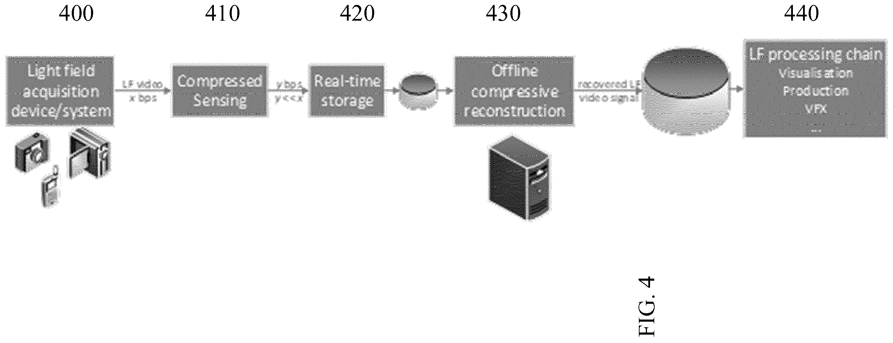

Figure 4 is a block diagram illustrating a compressive sensing scheme as used according to one embodiment.

Compressive sensing allows for preserving the light field frame-rate while storing only a light field subset on the flow, then in recovering the integrity of the whole 4D+t signal afterwards, in an offline process. As can be observed in the illustration of the video sensing chain of Figure 4, a light filed acquisition device or system 400 can provide compressed sensing 410 on a real-time basis 420 and store it for off-line compressive reconstruction later 440.

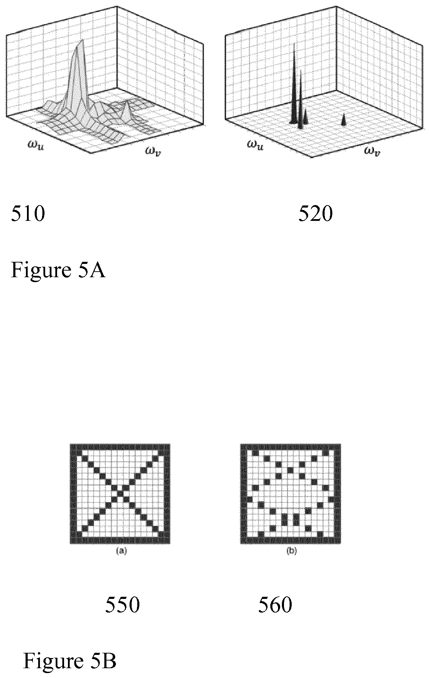

Figure 5A provides an illustration of the sparsity concept according to one embodiment. The diagram on the left, referenced by numerals 510 is an example of the discrete domain while the one on the right referenced at 520 provides an illustration of sparsity in the continuous domain. Sparsity is the property that enables the dense reconstruction of signals, such as 2D images or 4D light fields, from a small set of samples, using e.g. Fourier basis functions. The sparsity of natural spectra derives from continuous arguments, yet reconstruction algorithms usually work in the discrete Fourier domain. Those algorithms usually assume that sparsity derived from continuous principles will hold under discrete sampling. Yet sparsity is much greater in the continuous Fourier spectrum than in the discrete spectrum, because of sampling. Indeed, as can be observed in Figure 5A, energy peaks do seldom fall on the grid of the Discrete Fourier Transform. In a signal reconstruction perspective, using Fourier basis functions requires to recover the contributions of every surrounding integer frequency.

In one embodiment, a system can be provided that combines concept of sparsity optimization as provided in Figure 5A, such as in the continuous Fourier domain, with the compressed light field sensing framework (i.e. an input consisting in a 4D sampled signal). Before this embodiment can be further explored in detail, a brief discussion of usage of continuous Fourier spectrum for signal reconstruction will be provided for ease of understanding.

In some traditional prior art approaches, light field reconstructions consider the continuous Fourier in the angular dimensions. In such scenarios, a preliminary step first computes, using a Fourier slice theorem, a rough estimate of the frequency position of the few non-zero Fourier coefficients from the 2D transforms of a specific view subset. Then those 4D frequencies are refined to non-integer (non-discrete) positions by minimizing an error criterion. This approach has many limitations, however. For one, the scenario discussed above provides a strong reconstruction noise. It also provides constraints on the input samples being used.

To better understand the limitations and workings using these methods, Figure 5B provides an illustration of an angular domain along the discrete lines. In example a, referenced as 550, a box and two diagonals are provided while in example b, referenced as 560, a box and two lines, each with slopes of +/- is provided which provides the case of the lines (discrete) being wrapped around one another.

In order to provide a compressive 4D light field reconstruction that is less restrictive, an Orthogonal Frequency Selection (OFS) can be used. In such a scenario, given a 4D sampled signal, a collection of Fourier basis function is iteratively selected in an Orthogonal Matching Pursuit fashion and yields an accurate reconstruction of the original light field. A weighting function w is introduced as a mask to discriminate the available and reconstructed samples from the missing data in the sampled input. The following pseudocode can be used as an example to provide an overview of the OFS algorithm.

---

**Orthogonal Frequency Selection (OFS) algorithm overview**

**Input:** A sampled signal $\Phi f$: $\Omega \rightarrow \mathbb{R}$, and weighting function $w$, determined by $\Phi$

**Output:** approximation model $g = \sum_{k=1}^{n} c_{\mathbf{v}_k}^{(n)} \cdot \varphi_{\mathbf{v}_k}$

**Initialization:**

$n \leftarrow 0$ approximation initialization: $g^{(0)} \leftarrow 0$, $\mathbf{G}^{(0)} \leftarrow 0$

residue initialization: $r^{(0)} \leftarrow \rho(f, g^{(0)}, w)$

Computation of $\mathbf{R}^{(0)}$, Fourier transform of the residue

Computation of $W$, Fourier transform of the weighting function

**Repeat:**

$n \leftarrow n + 1$

Selection of a new basis function $\varphi_{v_n}$ from the analysis of $R^{(n-1)}$

Computation of the corresponding new coefficient set $\left\{ c_{v_k}^{(n)} \right\}_{k \leq n}$ from $R^{(n-1)}$ and $W$

Update of the residue in the Fourier domain $R^{(n)}$

Update of the approximation model in the Fourier domain $G^{(n)}$

**Until** a given stopping condition is met

---

(continued)

| Orthogonal Frequency Selection (OFS) algorithm overview |
| --- |
| $$g \leftarrow \mathcal{F}^{-1}\big(\boldsymbol{G}^{(n)}\big)$$ |

Improvements can be made by the addition of a non-integer frequency refinement step within the iterative loop:

$$g^{(n)} = \sum_{k=1}^{n} c_{\vartheta_k}^{(n)} \cdot \varphi_{\vartheta_k}$$

Where $\forall k, \vartheta_k \in \mathbb{R}^4$ instead of $\mathbb{Z}^4$.

In on embodiment, the following pseudocode can be used, as per one embodiment, in a compressive light field reconstruction scheme.

---

**Compressive Fourier-based light field reconstruction using non-integer frequency refinement**

**Input:** sampled signal $\Phi f$: $\Omega \rightarrow \mathbb{R}$, and weighting function w, determined by $\Phi$

**Output:** approximation model $g^{(n)} = \sum_{k=1}^{n} c_{\vartheta_k}^{(n)} \cdot \varphi_{\vartheta_k}$

**Initialization:**

$$n \leftarrow 0$$

approximation initialization: $g^{(0)} \leftarrow 0$
residue initialization: $r^{(0)} \leftarrow \rho(f, g^{(0)}, w)$
Computation of $R^{(0)}$, Fourier transform of the residue
Computation of $W$, Fourier transform of the weighting function

**Repeat:**

$$n \leftarrow n + 1$$

Selection of a new basis function $\varphi_{v_n}$, $v_n \in \mathbb{Z}^4$, from the analysis of $R^{(n-1)}$

Refine $v_n$ to $\vartheta_n \in \mathbb{R}^4$ computation and analysis of $\left\{R_{v_n + d\vartheta}^{(n-1)}\right\}_{d\vartheta \in \Delta}$

Computation of the corresponding new coefficient set $\left\{c_{\vartheta_k}^{(n)}\right\}_{k \leq n}$ from $r^{(n-1)}$ and $W$

Update of the residue in the light field domain $r^{(n)}$
Update of the approximation model in the light field domain $g^{(n)}$
**Until** a given stopping condition is met

---

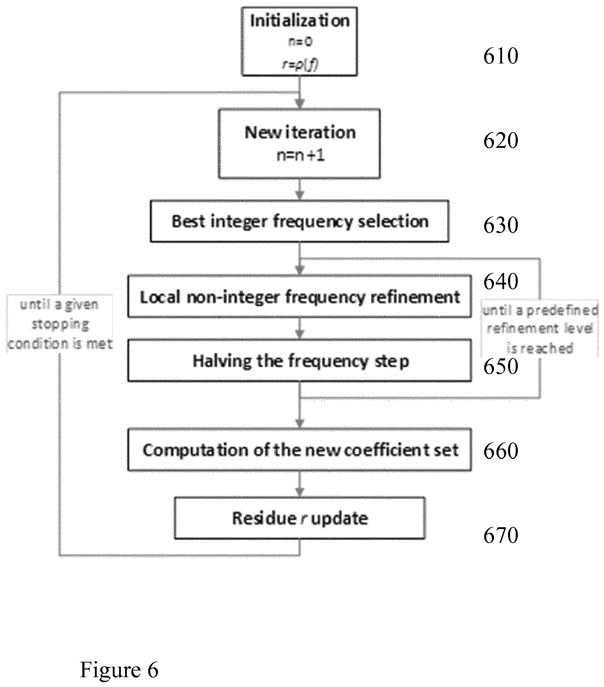

Figure 6 is a flow diagram according to one embodiment, which provides an iterative signal reconstruction process with non-integer frequency refinement. As provided in 610, an initialization step is performed, and the value of $n$ is increased to provide iterations as shown at 620. The best integer frequency is then selected at step 630 and the local non-integer frequency refinement is started as shown at step 640 and then process is halved as in step 650 until a pre-defined refinement level is reached. The process then proceeds to step 660 and computation of the new coefficient set is calculated and the residual information is updated in step 670. This process is reiterated until a given stopping condition is met.

In this example, the computation and update steps after the frequency refinement do not benefit anymore to be implemented in the Fourier domain. This provides for some advantages. First, since sparsity is higher in the continuous domain than in the discrete domain, releasing the selected atoms out of the discrete Fourier basis provides a more efficient representation: a higher reconstruction quality is achieved with the refined frequency positions at a given number of iterations.

Integrating the refinement into the reconstruction loop permits also to avoid recomputing all the expansion coefficients of the selected frequencies for each possible refinement of the frequency position. The selected position refinement corresponds to the one where the projection of residue is maximal. The approximation model g is constructed from already best selected non-integer frequencies, and no optimization step is further needed.

In addition, combining Fourier-based compressed sensing with non-integer frequency refinement also fixes the noise issue of the prior art. This is a great shortcoming and a problem in the prior art as the noise impacts the views differently depending on their angular position. In other words, the farther from the sampled lines, the higher the noise level. The compressed sensing framework not being inherent to a specific sampling scheme, efficiently decreases the noise level, as the sampling can be random, and thus reduces much the distance between input samples.

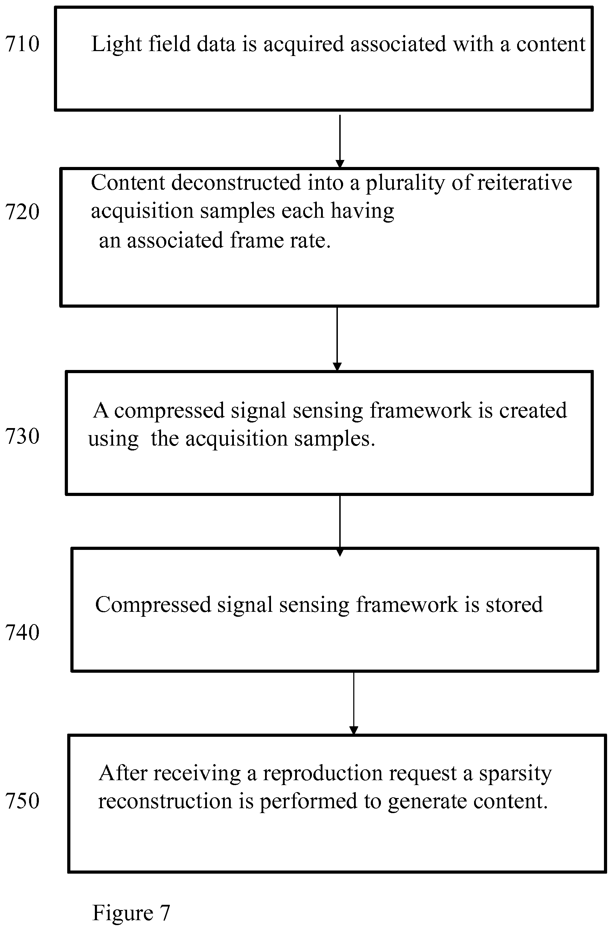

Figure 7 is an illustration of a flow diagram according to one embodiment. In step 710 light field data is acquired. The data could be associated with a variety of content, ranging from image/images to streaming content to videos. In step 720, the content is then deconstructed into several samples. In step 730, a compressed signal sensing framework is created using the acquisition samples. This compressed signal sensing framework is then stored as shown in step 740. Upon receiving a reproduction request in step 750, a sparsity reconstruction is performed on the previously stored compressed signal sensing framework to generate content associated with light field data.

To understand this concept more clearly, a more detailed description of the frequency refinement step is presently provided. The non-integer frequency refinement mentioned in previous section consists in an iterative exploration around the integer frequency provided as input. For every new non-integer frequency position, the corresponding Fourier coefficient is computed. The largest coefficient in modulus indicates the frequency that optimizes the approximation sparsity.

**Frequency refinement is advantageously implemented iteratively in a dichotomic manner: Frequency refinement procedure**

**Input**: integer frequency $v \in \mathbb{Z}^4$ and current residue $r$

**Output**: non-integer frequency $\vartheta \in \mathbb{R}^4$

**Initialization**: {

    $largest\_R \leftarrow |R_v|$

    $\vartheta \leftarrow v$

    $\Delta = \{(-1,-1),(-1,0),(-1,1),(0,-1),(0,1),(1,-1),(1,0),(1,1)\}$

    $\delta \leftarrow 1/2$

    $iref \leftarrow 1$

}

**While** $iref \leq lmax\_refinement$ **do** {

    **for** $(ds, dt) \in \Delta$ {

        **for** $(du, dv) \in \Delta$ {

            $d\vartheta \leftarrow (\delta.ds \; \delta.dt \; \delta.du \; \delta.dv)^t$

            $\vartheta' = \vartheta + d\vartheta$

            $R_{\vartheta'} \leftarrow \sum_{p \in \Omega} r[p].\varphi^*_{\vartheta'}[p]$

        }

    }

$$\vartheta^+ = \underset{\vartheta'}{\mathrm{argmax}}(|R_{\vartheta'}|)$$

$$\textbf{if } (|R_{\vartheta^+}| > largest\_R) \textbf{ then } \{$$

$$largest\_R \leftarrow |R_{\vartheta^+}|$$

$$\vartheta \leftarrow \vartheta^+$$

$$\}$$

$$\delta \leftarrow \delta/2$$

$$iref \leftarrow iref + 1$$

$$\}$$

Depending on the spatio-angular resolution of the light field, that depends on the acquisition device, the exploration loop can restrict the non-integer investigations to the two angular dimensions or to the two spatial dimensions.

Throughout the disclosure, one of skill understands that certain representative embodiments may be used in the alternative or in combination with other representative embodiments.

In addition, the methods described herein may be implemented in a computer program, software, or firmware incorporated in a computer readable storage medium as instructions for execution by a computer or processor to perform the actions described hereinabove. Examples of non-transitory computer-readable storage media include, but are not limited to, a read only memory (ROM), random access memory (RAM), a register, cache memory, semiconductor memory devices, magnetic media such as internal hard disks and removable disks, magneto-optical media, and optical media such as CD-ROM disks, and digital versatile disks (DVDs).

**Claims**

1. A method comprising:

    deconstructing an acquired light field data into a plurality of acquisition samples;
    creating a compressed signal sensing framework using the acquisition samples; and
    upon receiving a reproduction request, performing a sparsity reconstruction on said compressed signal sensing framework to provide a content associated with said previously acquired light field data.

2. A system comprising:

    one or more processors configured to
    deconstruct an acquired light filed data into a plurality of acquisition samples;
    create a compressed signal sensing framework using the acquisition samples; and
    upon receiving a reproduction request, perform a sparsity reconstruction on said compressed signal sensing framework to provide a content associated with said light field data.

3. The system of claim 2, wherein said one or more processors provide said compressed signal sensing frameworks by analysing said acquisition samples and selecting a subset of said samples based on their acquisition frame rate.

4. The method of claim 1 further comprising providing said compressed signal sensing frameworks by analysing said acquisition samples and selecting a subset of said samples based on their acquisition frame rate.

5. The method of claims 1 or 4 or the system of claims 2-3 wherein said reconstruction is performed using a sparsity optimization.

6. The method of claim 5 or the system of claim 5, wherein said optimization is performed using a continuous Fourier domain function.

7. The method of any of claims 1 or 4-6 or the system of any of claims 2-3 and 5-6, wherein the acquired light field data further comprises color data includes meta data.

8. The method of any of claims 1 or 4-6 or the system of any of claims 2-3 and 5-7, wherein the acquired light field data is provided as meta data.

9. The system of any one of claims 2-3 and 5-8, wherein said one or more processors are provided in a light field imaging device having an array of micro lenses arranged in a regular lattice structure and a photosensor configured to capture light projected on the photosensor from the array of micro lenses, the photosensor comprising sets of pixels, each set of pixels being optically associated with a respective micro lens of the array of micro lenses.

10. The method of any of claims 1 or 4-8 and 5-8 said light field data is acquired via n a light field imaging device having an array of micro lenses arranged in a regular lattice structure and a photosensor configured to capture light projected on the photosensor from the array of micro lenses, the photosensor comprising sets of pixels, each set of pixels being optically associated with a respective micro lens of the array of micro lenses.

11. The method of claim 10 or system claim 9, wherein sparsity optimization uses a Fourier based function to reproduce a 4-dimensional light field.

12. The method of claim 11 or system of claim 11, wherein said sparsity optimization uses a plurality of sample subsets.

13. The method of claim 10 or system of claim 9, wherein sparsity optimization uses a Fourier based function to reproduce a 2D image using said sample subsets.

14. The method of any one of claims 1 and 4 - 13 or the system of any one of claims 2-3 and 5-13, wherein said acquired data was captured using a light field camera.

15. A non-transitory computer-readable medium storing computer-executable instructions executable to perform the method of any of claims 1 and 4-14.

**FIG. 1A**

**FIG. 1B**

**FIG. 2A**

FIG.2B

MI

j

i

$(x_{i,j}, y_{i,j})$

**FIG. 3**

FIG. 4

510                                   520

Figure 5A

550              560

Figure 5B

Figure 6

| 710 | Light field data is acquired associated with a content |
|---|---|

| 720 | Content deconstructed into a plurality of reiterative acquisition samples each having an associated frame rate. |
|---|---|

| 730 | A compressed signal sensing framework is created using the acquisition samples. |
|---|---|

| 740 | Compressed signal sensing framework is stored |
|---|---|

| 750 | After receiving a reproduction request a sparsity reconstruction is performed to generate content. |
|---|---|

Figure 7

Europäisches
Patentamt

European
Patent Office

Office européen
des brevets

## EUROPEAN SEARCH REPORT

Application Number

EP 18 30 6545

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HAWARY FATMA ET AL: "Compressive 4D Light Field Reconstruction Using Orthogonal Frequency Selection", 2018 25TH IEEE INTERNATIONAL CONFERENCE ON IMAGE PROCESSING (ICIP), IEEE, 7 October 2018 (2018-10-07), pages 3863-3867, XP033454685, DOI: 10.1109/ICIP.2018.8451110 [retrieved on 2018-08-29] | 1,2,5-8, 11-15 | INV. H04N13/111 G06T7/00 H04N13/161 H04N19/597 |
| Y | * Introduction; sections 2.1 and 4. * | 3,4,9,10 | |
| Y | Zhaorui Liu: "Maximum Frame Rate Video Acquisition Using Adaptive Compressed Sensing", , 24 January 2011 (2011-01-24), pages 1-73, XP055000350, Edmonton, Alberta DOI: 10.1109/TCSVT.2011.2133890 Retrieved from the Internet: URL:http://repository.library.ualberta.ca/dspace/bitstream/10048/1742/1/Liu_Zhaorui_Spring+2011.pdf [retrieved on 2011-06-08] * Chapter 3. * | 3,4 | |
| Y | EP 3 023 826 A1 (THOMSON LICENSING [FR]) 25 May 2016 (2016-05-25) * paragraph [0053] - paragraph [0054] * | 9,10 | |

-/--

TECHNICAL FIELDS SEARCHED (IPC)

H04N
G06T

The present search report has been drawn up for all claims

| Place of search | Date of completion of the search | Examiner |
|---|---|---|
| The Hague | 6 June 2019 | Cooke, Edward |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 18 30 6545

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CANDES E J ED - SANZ-SOLÉ MARTA: "Compressive Sampling", INTERNATIONAL CONGRESS OF MATHEMATICIANS : MADRID, AUGUST 22 - 30, 2006, ES , 22 August 2006 (2006-08-22), pages 1-20, XP002562789, Retrieved from the Internet: URL:http://www-stat.stanford.edu/~candes/papers/CompressiveSampling.pdf [retrieved on 2010-01-11] * abstract * ----- | 1,2,15 | |

TECHNICAL FIELDS
SEARCHED (IPC)

The present search report has been drawn up for all claims

| Place of search | Date of completion of the search | Examiner |
|---|---|---|
| The Hague | 6 June 2019 | Cooke, Edward |

CATEGORY OF CITED DOCUMENTS

X : particularly relevant if taken alone
Y : particularly relevant if combined with another
 document of the same category
A : technological background
O : non-written disclosure
P : intermediate document

T : theory or principle underlying the invention
E : earlier patent document, but published on, or
 after the filing date
D : document cited in the application
L : document cited for other reasons

& : member of the same patent family, corresponding
 document

EPO FORM 1503 03.82 (P04C01)

## ANNEX TO THE EUROPEAN SEARCH REPORT
## ON EUROPEAN PATENT APPLICATION NO.

EP 18 30 6545

This annex lists the patent family members relating to the patent documents cited in  the above-mentioned European search report.
The members are as contained in the European Patent Office EDP file on
The European Patent Office is in no way liable for these particulars which are merely given for the purpose of information.

06-06-2019

| Patent document cited in search report | | Publication date | Patent family member(s) | Publication date |
|---|---|---|---|---|
| EP 3023826 | A1 | 25-05-2016 | NONE | |

For more details about this annex : see Official Journal of the European Patent Office, No. 12/82